# FASCICULE DE BREVET EUROPEEN

(11) **EP 4 433 366 B1**
(45) Date de publication et mention de la délivrance du brevet: **15.07.2026**
(21) Numéro de dépôt: 22818001.4
(22) Date de dépôt: 15.11.2022
(51) Int. Cl.: B64D 11/06

(54) **DISPOSITIF DE SÉPARATION AMOVIBLE NOTAMMENT POUR UNE CABINE D'AVION**
ABNEHMBARE TRENNVORRICHTUNG, INSBESONDERE FÜR EINE FLUGZEUGKABINE
REMOVABLE SEPARATION DEVICE, IN PARTICULAR FOR AN AIRCRAFT CABIN

(30) Priorité: 17.11.2021 FR 2112125
(43) Date de publication de la demande: 25.09.2024
(73) Titulaire: Safran Seats, 78370 Plaisir (FR); ID-Product, 31100 Toulouse (FR)
(72) Inventeur: BONNEFOY, Bastien, 77550 Moissy-Cramayel (FR); CANS, Benjamin, 31100 Toulouse (FR)
(74) Mandataire: Marconnet, Sébastien
(86) Numéro de dépôt international: PCT/EP2022/082047
(87) Numéro de publication internationale: WO 2023/088923

(56) Documents cités:
- WO-A1-2017/066559
- WO-A1-2021/023581
- WO-A1-2021/084479
- US-A1- 2021 221 516

## Description

La présente invention porte sur un dispositif de séparation amovible notamment pour une cabine d'avion. L'invention trouve une application particulièrement avantageuse avec les cabines d'avion équipées d'unités de sièges de type "classe affaires" et "première classe".

De façon connue en soi, une telle unité de siège comporte un siège associé à une console latérale et à une coque d'intimité s'étendant au moins en partie autour du siège.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions. Le siège est généralement constitué notamment du dossier et d'une assise et est susceptible de comprendre un repose-jambes et/ou un repose-pieds, pouvant être fixes ou liés à une cinématique du siège.

Afin de garantir l'intimité du passager, il est possible de prévoir un séparateur amovible disposé entre deux sièges adjacents et/ou une paroi de séparation amovible pouvant sélectivement obturer ou laisser libre un passage d'accès à un couloir de circulation. Les parois de ces dispositifs de fermeture d'espace peuvent prendre la forme d'un panneau plein ou d'un rideau. Il est ainsi possible de créer, avec la coque d'intimité, un espace clos autour de l'unité de siège permettant d'isoler le passager de l'environnement extérieur.

Par exemple, le document FR3078946 décrit un dispositif de séparation comportant un enrouleur autour duquel un rideau flexible est enroulé en position stockée. Lorsque le rideau flexible est déroulé, il est possible de créer avec la coque d'intimité, un espace clos autour de l'unité de siège. Toutefois, l'enrouleur présente une masse et un encombrement importants. L'intégration de l'enrouleur sur l'unité de siège a donc pour effet de réduire l'espace de vie du passager.

Le document US2021/221516 décrit un dispositif de fermeture amovible d'un espace à l'intérieur d'un avion comportant un bâti comprenant au moins un montant, un ensemble à rideau comportant un rideau flexible, et au moins un dispositif de guidage apte à assurer un guidage en translation du rideau flexible par rapport au montant, de telle façon que le rideau flexible est apte à être déplacé suivant une direction de déplacement parallèle à une direction longitudinale du montant entre une position stockée dans laquelle le rideau flexible est dégagé de l'espace et une position déployée dans laquelle le rideau flexible obture l'espace.

Le document WO2017/066559 décrit un ensemble de commande destiné à un écran ou à une porte de style alvéole. Des galets supérieur et inférieur de guidage portés par l'écran circulent le long de rails réglables de guidage montés dans l'alvéole. Un ensemble d'aimants comprend un aimant immobile monté dans la paroi de l'alvéole, disposé de façon à attirer un aimant mobile porté sur un câble pour faciliter l'ouverture et la fermeture de l'écran.

L'invention vise notamment à remédier efficacement à cet inconvénient en proposant un dispositif de séparation amovible d'un espace, notamment pour une cabine d'avion comportant:
- un châssis fixe,
- un volet mobile, et
- deux liaisons glissières montées entre le châssis fixe et le volet mobile,
- au moins une des liaisons glissières s'étendant suivant un bord latéral correspondant du volet mobile de façon à autoriser un déplacement en translation du volet mobile par rapport au châssis fixe,
- au moins une des liaisons glissières étant formée par au moins un galet porté par un des éléments parmi le volet mobile et le châssis fixe coopérant avec un rail correspondant fixé sur l'autre des éléments parmi le volet mobile et le châssis fixe.

L'invention permet ainsi, grâce à la présence des liaisons glissières à galets, de supprimer la présence d'un enrouleur et donc d'obtenir un gain de masse, de coût, et d'encombrement pour le dispositif de séparation amovible. L'invention présente également, du fait de sa configuration compacte, l'avantage de faciliter les opérations de maintenance en permettant un remplacement rapide du dispositif de séparation en cas de dysfonctionnement.

Selon une réalisation de l'invention, un système à câble est relié au volet mobile de façon à créer un effort de tension sur le volet mobile.

Selon une réalisation de l'invention, ledit dispositif de séparation amovible comporte un dispositif à friction muni d'au moins un patin destiné à venir frotter contre le rail correspondant.

Le galet présente une forme cylindrique et est muni d'une gorge s'étendant suivant sa circonférence, le rail étant inséré à l'intérieur de la gorge du galet.

Selon une réalisation de l'invention, le volet mobile comporte un panneau souple disposé entre deux cadres réalisés dans un matériau rigide, notamment un matériau métallique ou un matériau plastique rigide.

Selon une réalisation de l'invention, le galet est lié mécaniquement aux cadres.

Selon une réalisation de l'invention, le panneau souple est composé d'un panneau central réalisé dans un matériau souple, tel que du tissu, et de deux panneaux d'habillage positionnés de part et d'autre du panneau central.

Selon une réalisation de l'invention, ledit dispositif de séparation amovible comporte des butées d'arrêt du volet mobile respectivement dans une position stockée et dans une position déployée.

Selon une réalisation de l'invention, le galet est monté sur une tige filetée formant un axe du galet, deux rondelles étant disposées respectivement de part et d'autre du galet.

Selon une réalisation de l'invention, la tige filetée est issue d'une première oreille de fixation, la tige filetée étant insérée à l'intérieur d'une ouverture d'une deuxième oreille de fixation associée à un écrou coopérant avec la tige filetée.

L'invention a également pour objet une unité de siège comportant un siège, une console, et un dispositif de séparation amovible tel que précédemment défini monté à l'intérieur d'un logement d'une paroi de la console.

L'invention concerne en outre un ensemble comportant deux unités de sièges et un dispositif de séparation amovible tel que précédemment défini disposé entre les deux unités de sièges de façon à pouvoir sélectivement obturer ou laisser libre un espace entre les deux unités de sièges.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective de plusieurs unités de sièges pouvant être séparées deux à deux par un dispositif de séparation amovible selon l'invention;
[Fig. 2a] [Fig. 2b] Les figures 2a et 2b sont des vues en perspective d'un dispositif de séparation amovible selon l'invention disposé à l'intérieur d'un logement d'une paroi d'une console et représenté respectivement en position stockée et en position déployée;
[Fig. 3] La figure 3 est une vue en perspective détaillée d'un dispositif de séparation amovible selon l'invention;
[Fig. 4a] [Fig. 4b] Les figures 4a et 4b montrent respectivement des vues de face et de côté d'un volet mobile selon l'invention;
[Fig. 5] La figure 5 est une vue en perspective éclatée d'un volet mobile d'un dispositif de séparation amovible selon l'invention;
[Fig. 6] La figure 6 est une vue en perspective éclatée d'un dispositif de fixation d'un galet de guidage.

Il est à noter que les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, dans la suite de la description, les termes relatifs du type "horizontal", "vertical", "supérieur", "inférieur", sont entendus par référence au sens commun que leur donnerait un passager assis sur un siège auquel est associé un dispositif de séparation amovible selon l'invention.

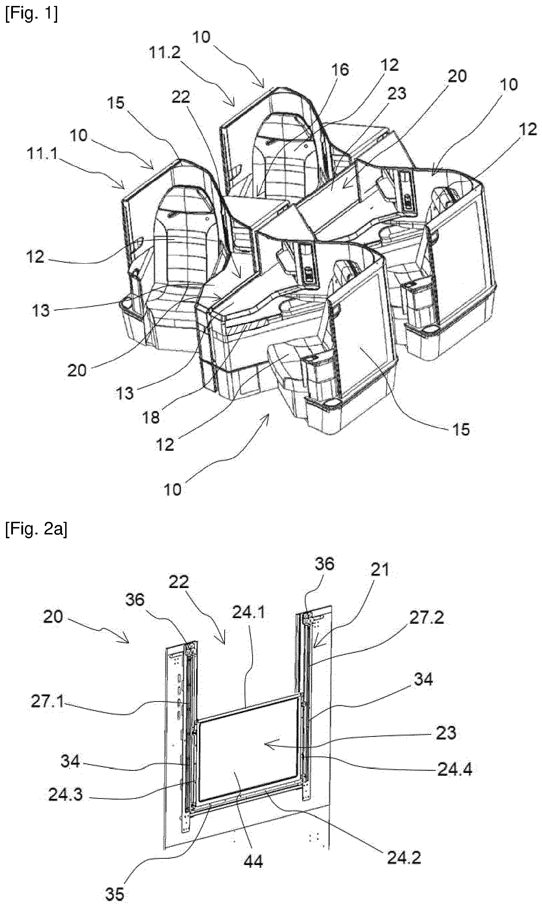

La figure 1 montre quatre unités de sièges 10, à savoir deux ensembles 11.1, 11.2 de deux unités de sièges 10 positionnés l'un derrière l'autre. Bien entendu, dans une cabine d'avion, le nombre d'ensembles 11.1, 11.2 d'unités de sièges 10 positionnés les uns derrière les autres sous forme de colonne pourra être supérieur à deux. Il est également possible de former des colonnes de plusieurs unités de sièges 10 individuelles.

Une unité de siège 10 comporte au moins un siège 12 associé à une console latérale 13 s'étendant suivant un côté du siège 12. Une coque 15 s'étend au moins en partie autour du siège 12 de manière à délimiter un espace clos autour du passager. Une telle configuration permet de garantir l'intimité du passager assis sur le siège 12. Un écran vidéo 16 d'un système multimédia ou IFE (pour "Inflight Entertainment System" en anglais) pourra être implanté sur une partie arrière de la coque d'intimité 15.

L'unité de siège 10 pourra également comporter classiquement une tablette repas 18 mobile entre une position stockée (correspondant à celle représentée sur les figures) dans laquelle la tablette repas 18 se trouve à l'intérieur d'un logement ménagé dans la console 13 et une position déployée dans laquelle la tablette repas 18 se situe à l'extérieur du logement.

Le siège 12 est avantageusement pourvu d'une cinématique lui permettant d'être mobile entre une position "assise" dans laquelle le siège 12 est configuré pour définir une position assise d'un passager, et une position "allongée" dans laquelle le siège 12 est configuré pour définir une surface de couchage du passager, avantageusement sensiblement horizontale.

Un dispositif de séparation amovible 20 est disposé entre deux unités de sièges 10 adjacentes de façon à pouvoir sélectivement obturer un espace entre les deux unités de sièges 10 pour conférer une intimité aux passagers ou laisser libre cet espace dans le cas où un passager souhaite pouvoir communiquer avec son voisin.

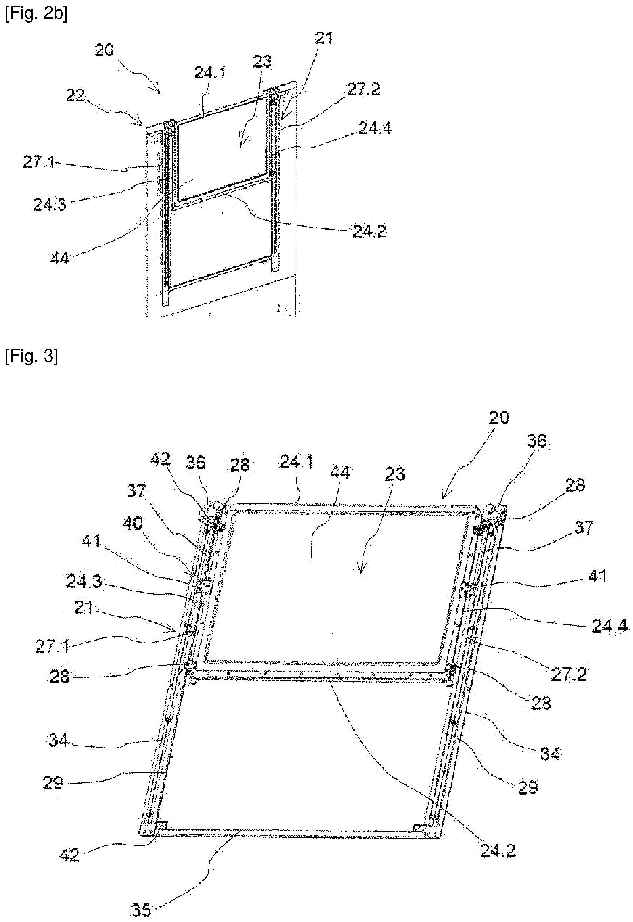

Plus précisément, comme on peut le voir sur les figures 2a et 2b, le dispositif de séparation amovible 20 comporte un châssis fixe 21 et un volet mobile 23. Le châssis fixe 21 est destiné à être monté à l'intérieur d'un logement 22 ménagé dans une console 13 (cf. figure 1). Le volet mobile 23 comporte un bord supérieur 24.1, un bord inférieur 24.2, et deux bords latéraux opposés s'étendant entre le bord supérieur 24.1 et le bord inférieur 24.2.

Deux liaisons glissières 27.1, 27.2 sont montées entre le châssis fixe 21 et le volet mobile 23. Une liaison glissière 27.1, 27.2 s'étend suivant un bord latéral 24.3, 24.4 correspondant du volet mobile 23 de façon à autoriser un déplacement en translation du volet mobile 23 par rapport au châssis 21. Les liaisons glissières 27.1, 27.2 s'étendent ainsi verticalement de part et d'autre du volet mobile 23 pour permettre un déplacement en translation du volet mobile 23 suivant une direction verticale.

Le volet 23 est mobile en translation par rapport au châssis 21 entre une position stockée dans laquelle le volet 23 est situé majoritairement à l'intérieur du logement 22, tel que cela est montré sur la figure 2a, et une position déployée dans laquelle le volet mobile 23 est situé majoritairement à l'extérieur du logement 22, tel que cela est montré sur la figure 2b. Avantageusement, le volet mobile 23 s'étend dans un plan vertical lorsqu'il se trouve dans la position stockée et lorsqu'il se trouve dans la position déployée.

Comme on peut le voir sur la figure 3, une liaison glissière 27.1, 27.2 est formée par au moins un galet 28 porté par le volet mobile 23 coopérant avec un rail 29 correspondant fixé sur le châssis 21. Les galets 28 pourront être fixés sur deux bords latéraux 24.3, 24.4 opposés du volet mobile 23. Avantageusement, on prévoit deux galets 28 fixés sur chaque bord latéral 24.3, 24.4 du volet mobile 23. Un premier galet 28 est disposé sur une extrémité haute d'un bord latéral 24.3, 24.4 et un deuxième galet 28 est disposé sur une extrémité basse d'un bord latéral 24.3, 24.4 du volet mobile 23. En variante, il serait possible de fixer plus de deux galets 28 ou un seul galet 28 sur un bord latéral 24.3, 24.4 du volet mobile 23.

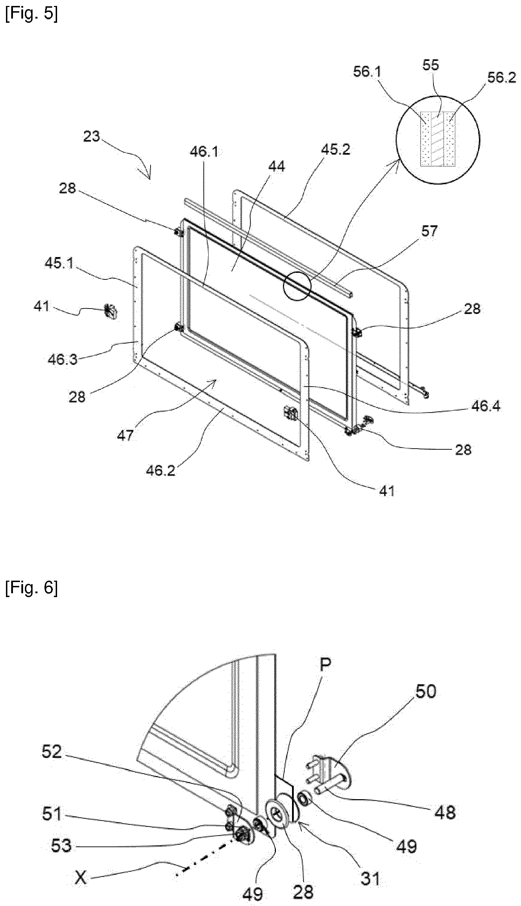

Comme on peut le voir sur la figure 6, un galet 28, de préférence chaque galet 28, présente une forme cylindrique et est muni d'une gorge 31 s'étendant suivant sa circonférence. Un rail 29, de préférence chaque rail 29, est inséré à l'intérieur de la gorge 31 d'au moins un galet 28 correspondant. La gorge 31 pourra être réalisée dans un plan médian P du galet 28 perpendiculaire à un axe X du galet 28. Ainsi, une épaisseur du galet 28 mesurée suivant un plan de coupe radial a tendance à diminuer lorsque l'on se déplace d'une extrémité axiale du galet 28 vers le plan médian P. Le galet 28 pourra être monté rotatif autour de son axe X de façon à pouvoir tourner lors d'un déplacement du volet 23 le long d'un rail 29. En variante, le galet 28 est fixe en rotation par rapport à l'axe X de façon à glisser le long du rail 29 lors d'un déplacement du volet 23.

Le châssis 21 bien visible sur la figure 3 pourra comporter deux montants 34 muni chacun d'un rail 29. Les montants 34 pourront être reliés entre eux par une barre de liaison 35 de façon à présenter une forme en U.

En variante, la structure pourra être inversée, c'est-à-dire que les galets 28 pourront être portés par le châssis 21, tandis que les rails 29 pourront être fixés sur les deux bords latéraux opposés 24.3, 24.4 du volet mobile 23.

Un système à câble 36 est relié au volet 23 de façon à créer un effort de tension sur le volet mobile 23. Ce système à câble 36 pourra par exemple comporter un câble 37 enroulé autour d'un axe monté sur un ressort de torsion permettant de créer l'effort de tension sur le volet 23. Le système à câble 36 permet d'obtenir une assistance à la remontée du volet 23 en position déployée. Le système à câble 36 permet également de maintenir le volet mobile 23 dans des positions intermédiaires situées entre la position stockée et la position déployée. Contrairement à un système de vérin, le système à câble 36 permet de compacter le mécanisme et de réduire son poids.

Un dispositif à friction 40 comporte au moins un patin 41 destiné à venir frotter contre le rail 29 correspondant. Dans l'exemple représenté, le dispositif à friction 40 comporte deux patins 41 disposés de part et d'autre du volet mobile 23. En l'occurrence, chaque patin 41 est fixé sur un bord latéral 24.3, 24.4 du volet mobile 23 et est destiné à venir frotter contre un rail 29. Un patin 41 pourra présenter une forme parallélépipédique et être muni d'une gorge de réception d'un rail 29. Un patin 41 pourra être réalisé dans un matériau plastique. Ce dispositif à friction 40 permet de compenser les différences de poids existant entre des volets 23 de dimensions différentes tout en utilisant un système à câble 36 commun pour tous les types de volets 23. Ainsi, on garantit qu'un volet mobile 23 plus grand et donc plus lourd qu'un volet moyen pourra également être maintenu dans la position souhaitée après relâchement de l'effort appliqué sur le volet 23 par le passager.

Il est possible de prévoir des butées d'arrêt 42 du volet mobile 23 respectivement en position stockée et en position déployée. Des parties fixes du volet mobile 23 pourront venir en appui contre ces butées d'arrêt 42 disposées respectivement en partie haute et basse du châssis 21.

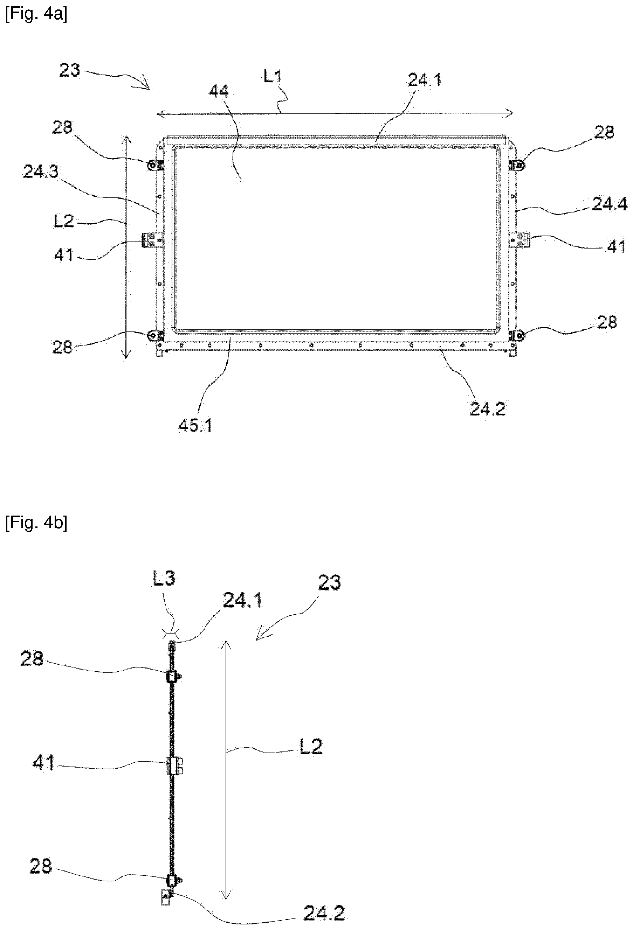

Comme on peut le voir sur les figures 4a et 4b, un volet mobile 23 pourra présenter une longueur L1 comprise entre 75cm et 150cm, une largeur L2 comprise entre 45 cm et 90cm et une épaisseur L3 comprise entre 2.5 cm et 5cm.

Comme cela est visible sur la figure 5, le volet mobile 23 comporte un panneau souple 44 disposé entre deux cadres 45.1, 45.2 réalisés dans un matériau rigide, notamment un matériau métallique ou un matériau plastique rigide. On obtient ainsi un empilement formé par les éléments suivants: cadre 45.1 - panneau souple 44 - cadre 45.2. Un cadre 45.1, 45.2 présente une forme qui suit une circonférence du panneau souple 44. Dans l'exemple représenté, le panneau souple 44 ainsi que les cadres 45.1, 45.2 présentent une forme rectangulaire. Un cadre 45.1, 45.2 comporte ainsi deux portions longitudinales 46.1, 46.2 et deux portions transversale 46.3, 46.4 reliant entre elles les portions longitudinales 46.1, 46.2. Les cadres 45.1, 45.2 délimitent une ouverture 47 dans laquelle s'étend le panneau souple 44 de forme rectangulaire. Il est également possible de prévoir une barrette de rigidification 57 s'étendant suivant un bord longitudinal du volet 23.

L'assemblage des composants du volet mobile 23 pourra être effectué au moyen d'organes de fixation, tels que des vis ou des rivets, assurant une liaison mécanique entre les deux cadres 45.1, 45.2 et le panneau souple 44 maintenu serré entre les deux cadres 45.1, 45.2.

En variante, le panneau souple 44 et les cadres 45.1, 45.2 pourront présenter une forme carrée ou toute autre forme adaptée à l'application et notamment à la dimension de l'espace à obturer.

Comme on peut le voir sur la figure 6, un galet 28, de préférence chaque galet 28, est lié mécaniquement aux cadres 45.1, 45.2. Plus précisément, un galet 28, de préférence chaque galet 28, est monté sur une tige filetée 48 formant un axe du galet 28. Deux rondelles 49 pourront être disposées respectivement de part et d'autre du galet 28. La tige filetée 48 est issue d'une première oreille de fixation 50. La tige filetée 48 est insérée à l'intérieur d'une ouverture 51 d'une deuxième oreille de fixation 52 associée à un écrou 53 coopérant avec la tige filetée 48. Les oreilles de fixation 50, 52 pourront être fixées chacune sur un cadre 45.1, 45.2 correspondant via des moyens de fixation adaptés pouvant consister en des vis ou des trous de fixation destinés à recevoir des organes de fixation, tels que des vis ou des rivets.

Comme cela est illustré dans l'encart de la figure 5, le panneau souple 44 est avantageusement composé d'un panneau central 55 réalisé dans un matériau souple, tel que du tissu, et de deux panneaux d'habillage 56.1, 56.2 positionnés de part et d'autre du panneau central 55. Le panneau souple 44 est ainsi constitué par un empilement formé par les éléments suivants: "panneau d'habillage 56.1 - panneau central 55 - panneau d'habillage 56.2". Les panneaux d'habillage 56.1, 56.2 pourront être réalisés dans un matériau plastique muni de motifs personnalisables par la compagnie aérienne. En variante, les panneaux d'habillage 56.1, 56.2 pourront être réalisés dans un matériau en cuir ou en alcantara de façon à conférer une meilleure qualité de finition à l'ensemble.

L'ensemble "châssis 21 - volet mobile 23 - liaisons glissières 27.1, 27.2" forme un module compact pouvant être installé à l'intérieur d'un logement 22 d'une paroi d'une console d'une unité de siège 10. En cas de dysfonctionnement, le module dans son ensemble pourra être aisément remplacé. Il est à noter que dans le mode de réalisation dans lequel les rails 29 sont portés par le volet mobile 23, on réduit l'amplitude de déplacement du module pour l'extraire de son logement 22, ce qui autorise un remplacement du module dans des environnements à fortes contraintes d'encombrement.

Bien entendu, les différentes caractéristiques, variantes et/ou formes de réalisation de la présente invention peuvent être associées les unes avec les autres selon diverses combinaisons dans la mesure où elles entrent dans le champ des revendications annexées.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention définie par les revendications annexées.

## Revendications

1. Dispositif de séparation amovible (20) d'un espace, notamment pour une cabine d'avion comportant:
- un châssis fixe (21),
- un volet mobile (23) qui est mobile en translation par rapport au châssis (21) entre une position stockée dans laquelle le volet (23) est situé majoritairement à l'intérieur d'un logement (22), et une position déployée dans laquelle le volet mobile (23) est situé majoritairement à l'extérieur du logement (22),
- ledit volet mobile (23) comportant un bord supérieur (24.1), un bord inférieur (24.2), et deux bords latéraux opposés (24.3, 24.4) s'étendant entre le bord supérieur (24.1) et le bord inférieur (24.2), et
- deux liaisons glissières (27.1, 27.2) montées entre le châssis fixe (21) et le volet mobile (23),
- au moins une des liaisons glissières (27.1, 27.2) s'étendant suivant un bord latéral (24.3, 24.4) correspondant du volet mobile (23) de façon à autoriser un déplacement en translation du volet mobile (23) par rapport au châssis fixe (21), au moins une des liaisons glissières (27.1, 27.2) étant formée par au moins un galet (28) porté par un des éléments parmi le volet mobile (23) et le châssis fixe (21) coopérant avec un rail (29) correspondant fixé sur l'autre des éléments parmi le volet mobile (23) et le châssis fixe (21),
- ledit volet mobile (23) s'étendant dans un plan vertical lorsqu'il se trouve dans la position stockée et dans la position déployée,
**caractérisé en ce que** le galet (28) présente une forme cylindrique et est muni d'une gorge (31) s'étendant suivant sa circonférence, et **en ce que** le rail (29) est inséré à l'intérieur de la gorge (31) du galet (28).

2. Dispositif de séparation amovible selon la revendication 1, **caractérisé en ce qu'**un système à câble (36) est relié au volet mobile (23) de façon à créer un effort de tension sur le volet mobile (23).

3. Dispositif de séparation amovible selon la revendication 1 ou 2, **caractérisé en ce qu'**il comporte un dispositif à friction (40) muni d'au moins un patin (41) destiné à venir frotter contre le rail (29) correspondant.

4. Dispositif de séparation amovible selon l'une quelconque des revendications 1 à 3, **caractérisé en ce que** le volet mobile (23) comporte un panneau souple (44) disposé entre deux cadres (45.1, 45.2) réalisés dans un matériau rigide, notamment un matériau métallique ou un matériau plastique rigide.

5. Dispositif de séparation amovible selon la revendication 4, **caractérisé en ce que** le galet (28) est lié mécaniquement aux cadres (45.1, 45.2).

6. Dispositif de séparation amovible selon la revendication 4 ou 5, **caractérisé en ce que** le panneau souple (44) est composé d'un panneau central (55) réalisé dans un matériau souple, tel que du tissu, et de deux panneaux d'habillage (56.1, 56.2) positionnés de part et d'autre du panneau central (55).

7. Dispositif de séparation amovible selon l'une quelconque des revendications 1 à 6, **caractérisé en ce qu'**il comporte des butées d'arrêt (42) du volet mobile (23) respectivement dans une position stockée et dans une position déployée.

8. Dispositif de séparation amovible selon l'une quelconque des revendications 1 à 7, **caractérisé en ce que** le galet (28) est monté sur une tige filetée (48) formant un axe du galet (28), deux rondelles (49) étant disposées respectivement de part et d'autre du galet (28).

9. Dispositif de séparation amovible selon la revendication 8, **caractérisé en ce que** la tige filetée (48) est issue d'une première oreille de fixation (50), la tige filetée (48) étant insérée à l'intérieur d'une ouverture (51) d'une deuxième oreille de fixation (52) associée à un écrou (53) coopérant avec la tige filetée (48).

10. Unité de siège comportant un siège, une console (13), et un dispositif de séparation amovible (20) tel que défini selon l'une quelconque des revendications précédentes monté à l'intérieur d'un logement (22) d'une paroi de la console (13).

11. Ensemble comportant deux unités de sièges (10) et un dispositif de séparation amovible (20) tel que défini selon l'une quelconque des revendications 1 à 9 disposé entre les deux unités de sièges (10) de façon à pouvoir sélectivement obturer ou laisser libre un espace entre les deux unités de sièges (10).

## Patentansprüche

1. Abnehmbare Trennvorrichtung (20) für einen Raum, insbesondere für eine Flugzeugkabine, umfassend:
- ein fester Rahmen (21),
- eine bewegliche Klappe (23), die zwischen einer verstauten Position, in der sich die Klappe (23) überwiegend innerhalb einer Aufnahme (22) befindet, und einer ausgefahrenen Position, in der sich die bewegliche Klappe (23) überwiegend außerhalb der Aufnahme (22) befindet, relativ zum Rahmen (21) eine Translationsbewegung durchführt,
- wobei die bewegliche Klappe (23) eine Oberkante (24.1), eine Unterkante (24.2) und zwei gegenüberliegende Seitenkanten (24.3, 24.4), die sich zwischen der Oberkante (24.1) und der Unterkante (24.2) erstrecken, umfasst und
- zwei Gleitverbindungen (27.1, 27.2), die zwischen dem festen Rahmen (21) und der beweglichen Klappe (23) angebracht sind
- wobei mindestens eine der Gleitverbindungen (27.1, 27.2) sich entlang einer entsprechenden Seitenkante (24.3, 24.4) der beweglichen Klappe (23) erstreckt, um eine Translationsbewegung der beweglichen Klappe (23) relativ zum festen Rahmen (21) zu ermöglichen,
- wobei mindestens eine der Gleitverbindungen (27.1, 27.2) durch mindestens eine von einem der Elemente unter der beweglichen Klappe (23) und dem festen Rahmen (21) getragene Rolle (28) gebildet wird und mit einer entsprechenden, an dem anderen Element unter der beweglichen Klappe (23) und dem festen Rahmen (21) befestigten Schiene (29) zusammenwirkt,
- wobei die bewegliche Klappe (23) sich in der verstauten und in der ausgefahrenen Position in einer vertikalen Ebene erstreckt,
**dadurch gekennzeichnet, dass** die Rolle (28) eine zylindrische Form aufweist und mit einer sich entlang ihres Umfangs erstreckenden Nut (31) versehen ist und, dass die Schiene (29) in die Nut (31) der Rolle (28) eingesetzt wird.

2. Abnehmbare Trennvorrichtung nach Anspruch 1, **dadurch gekennzeichnet, dass** ein Kabelsystem (36) mit der beweglichen Klappe (23) verbunden ist, um eine Zugkraft auf die bewegliche Klappe (23) auszuüben.

3. Abnehmbare Trennvorrichtung nach Anspruch 1 oder 2, **dadurch gekennzeichnet, dass** sie eine Reibungsvorrichtung (40) mit mindestens einem Gleitschuh (41) zum Reiben an der entsprechenden Schiene (29) umfasst.

4. Abnehmbare Trennvorrichtung nach einem der Ansprüche 1 bis 3, **dadurch gekennzeichnet, dass** die bewegliche Klappe (23) eine flexible Platte (44) umfasst, die zwischen zwei Gestelle (45.1, 45.2) angeordnet und aus einem starren Material, insbesondere einem metallischen Material oder einem starren Kunststoffmaterial, gefertigt ist.

5. Abnehmbare Trennvorrichtung nach Anspruch 4, **dadurch gekennzeichnet, dass** die Rolle (28) mechanisch mit den Gestellen (45.1, 45.2) verbunden ist.

6. Abnehmbare Trennvorrichtung nach Anspruch 4 oder 5, **dadurch gekennzeichnet, dass** die flexible Platte (44) aus einer Mittelplatte (55) aus einem flexiblen Material, wie z. B. Gewebe, und zwei auf beiden Seiten der Mittelplatte (55) angeordneten Abdeckplatten (56.1, 56.2) besteht.

7. Abnehmbare Trennvorrichtung nach einem der Ansprüche 1 bis 6, **dadurch gekennzeichnet, dass** sie Anschläge (42) für die bewegliche Klappe (23) jeweils in einer verstauten und einer ausgefahrenen Position aufweist.

8. Abnehmbare Trennvorrichtung nach einem der Ansprüche 1 bis 7, **dadurch gekennzeichnet, dass** die Rolle (28) auf einer eine Achse der Walze (28) bildenden Gewindestange (48) montiert ist, wobei jeweils zwei Scheiben (49) auf beiden Seiten der Walze (28) angeordnet sind.

9. Abnehmbare Trennvorrichtung nach Anspruch 8, **dadurch gekennzeichnet, dass** die Gewindestange (48) von einer ersten Befestigungslasche (50) ausgeht, wobei die Gewindestange (48) in eine Öffnung (51) einer zweiten, mit einer mit der Gewindestange (48) zusammenwirkenden Mutter (53) verbundenen Befestigungslasche (52) eingeführt ist.

10. Sitzeinheit mit einem Sitz, einer Konsole (13) und einer abnehmbaren, in einer Aufnahme (22) in einer Wand der Konsole (13) angebrachten Trennvorrichtung (20) nach einem der vorhergehenden Ansprüche.

11. Anordnung mit zwei Sitzeinheiten (10) und einer abnehmbaren Trennvorrichtung (20) nach einem der Ansprüche 1 bis 9, die zwischen den beiden Sitzeinheiten (10) angeordnet ist, um einen Raum zwischen den beiden Sitzeinheiten (10) wahlweise zu schließen oder freizugeben.

## Claims

1. A removable separation device (20) for a space, particularly for an aircraft cabin, comprising:
- a fixed frame (21),
- a movable flap (23) which is movable in translation relative to the frame (21) between a stored position, in which the flap (23) is located predominantly inside a housing (22), and a deployed position in which the movable flap (23) is located predominantly outside the housing (22),
- said movable flap (23) comprising an upper edge (24.1), a lower edge (24.2), and two opposing lateral edges (24.3, 24.4) extending between the upper edge (24.1) and the lower edge (24.2), and
- two sliding connections (27.1, 27.2) mounted between the fixed frame (21) and the movable flap (23),
- at least one of the sliding connections (27.1, 27.2) extending along a corresponding lateral edge (24.3, 24.4) of the movable flap (23) so as to allow a translational movement of the movable flap (23) relative to the fixed frame (21),
- at least one of the sliding connections (27.1, 27.2) being formed by at least one roller (28) carried by one of the elements among the movable flap (23) and the fixed frame (21) cooperating with a corresponding rail (29) fixed on the other of the elements among the movable flap (23) and the fixed frame (21),
- said movable flap (23) extending in a vertical plane when it is in the stored position and in the deployed position,
**characterized in that** the roller (28) has a cylindrical shape and is provided with a groove (31) extending along its circumference, and **in that** the rail (29) is inserted into the groove (31) of the roller (28).

2. The removable separation device according to claim 1, **characterized in that** a cable system (36) is connected to the movable flap (23) so as to create a tension force on the movable flap (23).

3. The removable separation device according to claim 1 or 2, **characterized in that** it comprises a friction device (40) provided with at least one pad (41) for rubbing against the corresponding rail (29).

4. The removable separation device according to any one of the claims 1 to 3, **characterized in that** the movable flap (23) comprises a flexible panel (44) disposed between two mountings (45.1, 45.2) made of a rigid material, in particular a metallic material or a rigid plastic material.

5. The removable separation device according to claim 4, **characterized in that** the roller (28) is mechanically connected to the mountings (45.1, 45.2).

6. The removable separation device according to claim 4 or 5, **characterized in that** the flexible panel (44) is composed of a central panel (55) made of a flexible material, such as fabric, and two covering panels (56.1, 56.2) positioned on either side of the central panel (55).

7. The removable separation device according to any one of the claims 1 to 6, **characterized in that** it comprises stops (42) for the movable flap (23) respectively in a stored position and in a deployed position.

8. The removable separation device according to any one of the claims 1 to 7, **characterized in that** the roller (28) is mounted on a threaded rod (48) forming an axis of the roller (28), two washers (49) being arranged respectively on either side of the roller (28).

9. The removable separation device according to claim 8, **characterized in that** the threaded rod (48) is issued from a first fixing lug (50), the threaded rod (48) being inserted into an opening (51) of a second fixing lug (52) associated with a nut (53) cooperating with the threaded rod (48).

10. A seat unit comprising a seat, a console (13), and a removable separation device (20) as defined according to any one of the preceding claims mounted inside a housing (22) in a wall of the console (13).

11. An assembly comprising two seat units (10) and a removable separation device (20) as defined according to any one of the claims 1 to 9 arranged between the two seat units (10) so as to be able to selectively close or clear a space between the two seat units (10).
